# EUROPÄISCHE PATENTANMELDUNG

(11) **EP 2 431 623 A2**
(43) Veröffentlichungstag der Anmeldung: **21.03.2012**
(21) Anmeldenummer: 11179444.2
(22) Anmeldetag: 31.08.2011
(51) Int. Cl.: F16C 23/08, F16C 33/60

(54) **Toroidal-Rollenlager**

(30) Priorität: 18.09.2010 DE 102010046016
(71) Anmelder: Schaeffler Technologies AG & Co. KG, 91074 Herzogenaurach (DE)
(72) Erfinder: Hofbauer, Felix, 97424 Schweinfurt (DE); Grehn, Martin, 97456 Dittelbrunn (DE); Schröder, Rainer, 97440 Egenhausen (DE)

(57) **Zusammenfassung**

Toroidal-Rollenlager, bestehend aus einem Außenring (1) und einem Innenring (4) sowie dazwischen auf konkaven Laufbahnen (2, 5) abrollenden, langen, leicht balligen Toroidalrollen (8). Um die Montage und Demontage des Toroidal-Rollenlagers zu erleichtern, sind der Innenring (4) und/oder der Außenring (1) in Achsrichtung geteilt.

## Beschreibung

### Gebiet der Erfindung

Die Erfindung betrifft ein Toroidal-Rollenlager, bestehend aus einem Außenring und einem Innenring sowie dazwischen auf konkaven Laufbahnen abrollenden, langen, leicht ballige Toroidalrollen.

### Hintergrund der Erfindung

Toroidal-Rollenlager sind einreihige Radiallager mit langen, tonnenförmigen Rollen, die auf entsprechenden konkaven Laufbahnen abrollen und nicht an Borden, sondern nur durch Reibungskräfte geführt werden. Ein kleines Radialspiel der Toroidalrollen zwischen dem Außenring und dem Innenring ergibt ein relativ großes Axialspiel, so dass sich Toroidal-Rollenlager als Loslager anstelle von Zylinderrollenlager einsetzen lassen.

Da die Tragfähigkeit von Toroidal-Rollenlagern sehr hoch ist und sie in der Lage sind, Schiefstellung oder Axialverschiebungen auszugleichen, werden Toroidal-Rollenlager beispielsweise in thermisch und mechanisch hoch belasteten Strangführungsrollen eingesetzt. Eine derartige Verwendung ist in der WO 2007/048489 A1 beschrieben. Es handelt sich hierbei um eine Strangführungsrolle mit einer durchgehenden zentralen Welle und mit mindestens zwei Rollenmänteln, wobei die zentrale Welle in mindestens drei Wälzlagern drehbar gelagert abgestützt und jeder Rollenmantel zwischen zwei Wälzlagern drehfest auf der zentralen Welle angeordnet ist. Dabei ist die Strangführungsrolle mit den Wälzlagern schwimmend und eine Axialverschiebung zulassend in festliegenden Lagergehäusen abgestützt. Hierbei sind die axial außen liegenden Wälzlager Pendellrollenlager, während die axial innen angeordneten Wälzlager als Toroidal-Rollen-lager ausgebildet sind.

Zur Montage neuer Wälzlager und zur Demontage verschlissener oder beschädigter Wälzlager müssen die Wälzlager und die Rollenmäntel einzeln von der durchgehenden zentralen Welle abgenommen und wieder montiert werden, was zeitaufwendig ist und somit lange Stillstandszeiten einer Fertigungsanlage bedingt. Selbst wenn nur ein einzelnes Wälzlager auszutauschen ist, insbesondere ein inneres Wälzlager, muss die gesamte Strangführungsrolle mit ihrer durchgehenden zentralen Welle abgebaut und auseinander genommen werden.

### Aufgabe der Erfindung

Vor diesem Hintergrund liegt der Erfindung die Aufgabe zugrunde, die Montage und Demontage von Toroidal-Rollenlagern zu erleichtern, insbesondere bei Einbausituationen, die den Ausbau eines mittels eines Toroidal-Rollenlagers gelagerten Maschinenelements nur unter großen Schwierigkeiten zulassen.

### Zusammenfassung der Erfindung

Ausgehend von dieser Aufgabenstellung besteht die erfinderische Lösung bei einem Toroidal-Rollenlager der eingangs erwähnten Art darin, dass bei diesem Toroidal-Rollenlager der Innenring und/oder der Außenring in Achsrichtung geteilt sind. Das erfindungsgemäße, geteilte Toroidal-Rollenlager lässt sich mit Vorteil dann nutzen, wenn beispielsweise ein Toroidal-Rollenlager in einer bestehenden Einbausituation zu ersetzen ist, oder wenn ein Pendellrollenlager in einer bestehenden Einbausituation durch ein Toroidal-Rollenlager ersetzt werden soll, oder eine andere Lagerart in einer bestehenden Einbausituation durch ein Toroidal-Rollenlager ersetzt werden soll, oder auch wenn es die Einbauverhältnisse nicht zulassen, ein nicht geteiltes Toroidal-Rollenlager zu verbauen.

Vorzugsweise können der Innenring und/oder der Außenring in Axialrichtung in zwei Hälften geteilt sein, jedoch können der Innenring und/oder der Außenring auch nur geschlitzt oder in mehr als zwei Teile geteilt sein. An den Axialschlitz kann ein Trennwerkzeug angesetzt werden, mit dem der jeweilige Lagerring zur Demontage desselben auseinander gesprengt wird.

Gemäß einer Ausführungsform können die Teile des Innenrings und/oder des Außenrings miteinander verschraubt sein, jedoch ist es auch möglich, dass der Innenring und/oder Außenring durch wenigstens einen geteilten Spannring fixiert sind.

Auch der Spannring kann nur einen Längsschlitz zur Teilung desselben unter Krafteinwirkung aufweisen, oder aus zwei oder mehr Teilen bestehen.

Die Fixierung der Lagerring- und der Spannringteile kann gemäß einer Ausführungsform durch senkrecht zur Lagerlängsachse verlaufende Querbohrungen für Spannschrauben im Bereich der Teilfugen erfolgen.

Zur genauen Positionierung der Lagerring- und Spannringteile kann wenigstens eine der Querbohrungen als Passbohrung für eine Passschraube ausgebildet sein. Der Innenring und/oder der Außenring können beiderseits der Laufbahnen Borde aufweisen, die dazu dienen können, die Querbohrungen und darin die Spannschrauben aufzunehmen.

Werden Spannringe zum Fixieren verwendet, so kann wenigstens ein Spannring in wenigstens einer Nut im Außenring oder können zwei Spannringe in Nuten in den Borden des Innenrings angeordnet sein.

Wenn die Toroidalrollen im Toroidal-Rollenlager durch einen Käfig geführt sind, kann dieser Käfig ebenfalls geteilt sein, wobei dieser Käfig als massiver Fensterkäfig aus Metall, insbesondere Messing, oder aus glasfaserverstärktem Polyamid hergestellt sein kann. Ebenfalls geeignet sind zerlegbare Käfige, insbesondere Bolzenkäfige, die beispielsweise in der DE 35 28 138 A1 beschrieben sind, und Kammdeckelkäfige, die beispielsweise aus der DE 31 16 979 A1 bekannt sind. Gemäß einer weiteren Ausführungsform ist vorgesehen, dass das Toroidal-Rollenlager vollrollig ausgebildet ist. Demzufolge weist das Toroidal-Rollenlager die maximal mögliche Belegung des zur Verfügung stehenden Wälzlagerraumes mit Toroidalrollen auf, so dass die Tragfähigkeit entsprechend gesteigert wird.

### Kurze Beschreibung der Zeichnung

Die Erfindung wird nachstehend anhand zweier in der Zeichnung dargestellter Ausführungsformen weiter erläutert. In der Zeichnung zeigt
- Fig.1 1: einen axialen Teilschnitt eines erfindungsgemäßen Toroidal-Rollenlagers gemäß einer ersten Ausführungsform,
- Fig. 2: einen axialen Teilschnitt eines erfindungsgemäßen Toroidal-Rollenlagers gemäß einer zweiten Ausführungsform, und
- Fig. 3: einen vergrößerten Teilschnitt in Achsrichtung des Toroidal-Rollen-lagers gemäß Fig. 2.

### Ausführliche Beschreibung der Zeichnung

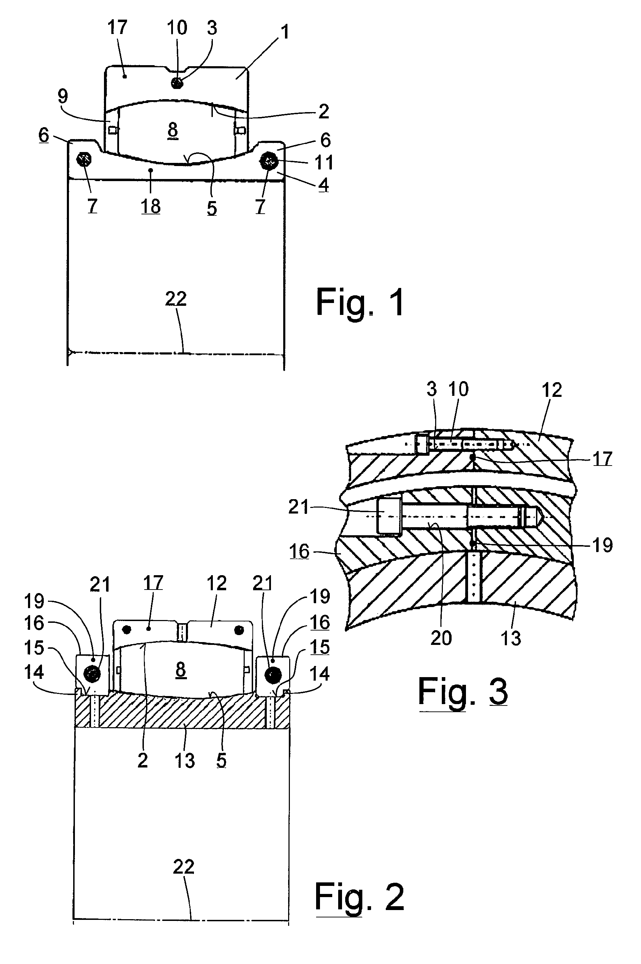

Das in Fig. 1 dargestellte Toroidal-Rollenlager umfasst einen Außenring 1 mit einer konkaven Laufbahn 2 und wenigstens eine senkrecht zur Lagerlängsachse 22 verlaufende Querbohrung 3 im Bereich einer Teilfuge 17 für eine Spannschraube 10 sowie einen Innenring 4 mit einer konkaven Laufbahn 5, beiderseits der Laufbahn angeordnete Borde 6 und Querbohrungen 7 in den Borden 6 zur Aufnahme von Spannschrauben 11, wobei diese Querbohrungen 7 ebenfalls im Bereich einer Teilfuge 18 des Innenrings 4 angeordnet sind.

Verhältnismäßig lange, leicht ballige Toroidalrollen 8, die in einem Käfig 9 geführt sind, rollen zwischen dem Außenring 1 und dem Innenring 4 auf den konkaven Laufbahnen 2, 5 ab.

Der Außenring 1 und der Innenring 4 sind in Richtung der Lagerlängsachse 22 in zwei Hälften geteilt, so dass in Fig. 1 die genannten Teilfugen 17, 18 sichtbar sind.

Zur Montage dieses Toroidal-Rollenlagers werden die Hälften des Innenrings 4 um eine nicht dargestellte Welle herum gelegt und mittels der durch die Querbohrungen 7 gesteckten Spannschrauben 11 auf der nicht dargestellten Welle verspannt, so dass die Laufbahn 5 im Bereich der Teilfuge 18 des Innenrings 4 absatzfrei ist. Danach werden die im Käfig 9 angeordneten Toroidalrollen 8 um den montierten Innenring 4 herumgelegt, und anschließend wird der Außenring 1 in der gleichen Weise wie der Innenring 4 montiert, indem die Hälften des Außenrings 1 über die Toroidalrollen 8 gelegt und mittels der in die Querbohrung 3 eingeführten Spannschrauben 10 fixiert werden.

Die nicht dargestellte Welle weist in der Regel wenigstens zwei Lager auf, von denen mindestens ein Lager das erfindungsgemäße, geteilte Toroidal-Rollenlager ist, das dann, wegen der erwähnten Eigenschaften des Toroidal-Rollenlagers als Loslager dient.

Die in Fig. 2 dargestellte Ausführungsform ist insbesondere für Toroidal-Rollenlager mit großen Bohrungen vorgesehen und umfasst einen in zwei Hälften geteilten Außenring 12, der im Bereich jeder Teilfuge 17 jeweils mit mindestens einer im Randbereich angeordneten Querbohrung 3 versehen ist. Das Toroidal-Rollenlager umfasst des Weiteren einen in zwei Hälften geteilten Innenring 13, der benachbart zur Laufbahn 5 Borde 14 aufweist, in denen Nuten 15 ausgebildet sind. Die im Käfig 9 geführten Toroidalrollen 8 rollen auf den Laufbahnen 2, 5 zwischen dem Außenring 12 sowie dem Innenring 13 ab, und ein Paar zweigeteilte Spannringe 16 lassen sich in die Nuten 15 einlegen. Diese Spannringteile der Spannringe 16 sind im Bereich ihrer Teilfugen 19 mit Querbohrungen versehen, die im dargestellten Ausführungsbeispiel als Passbohrungen 20 ausgeführt sind, in die sich Passschrauben 21 einführen lassen, wodurch die Spannringteile in radialer Richtung präzise zueinander positioniert sind.

Während die Teilfugen 17, 18 der Außenringe 1, 12 und der Innenringe 4, 13 fest gegeneinander gespannt werden müssen, um zu vermeiden, dass die Laufbahnen 2, 5 im Bereich der Teilfugen 17, 18 einen Absatz aufweisen, klaffen die Teilfugen 19 der Spannringe 16 um einen geringen Betrag auseinander, um ein sicheres Verspannen der Teile des Innenrings 4 zu erreichen. Dies ist in Fig. 3 deutlich erkennbar.

Selbstverständlich können auch die Außenringe 1, 12 gemäß den Figuren 1 bis 3 und der Innenring 4 gemäß Fig. 1 mittels Passschrauben verspannt sein, um den absatzfreien Verlauf der Laufbahnen 2, 5 sicherzustellen, wenn die Außenringe 1, 12 und der Innenring 4 nicht durch Bohrungen in den Maschinenteilen, in denen sie gelagert sind, zentriert werden.

Der Käfig 9 kann als geteilter Massivkäfig aus Metall, insbesondere Messing, oder aus glasfaserverstärktem Polyamid hergestellt sein, oder kann als Bolzenkäfig oder Kammdeckelkäfig ausgeführt sein, die sich in Achsrichtung auseinander nehmen und zusammensetzen lassen. Gegebenenfalls können auch diese Bolzenkäfige und Kammdeckelkäfige in Achsrichtung geteilt sein, wenn die Einbausituation dies erfordert.

Das erfindungsgemäße Toroidal-Rollenlager lässt sich in besonders vorteilhafter Weise in Verbindung mit einer Strangführungsrolle, wie sie in der WO 2007/048 489 A1 beschrieben ist, verwenden.

### Bezugszeichenliste

- 1: Außenring
- 2: Laufbahn
- 3: Querbohrung
- 4: Innenring
- 5: Laufbahn
- 6: Borde
- 7: Querbohrung
- 8: Toroidalrollen
- 9: Käfig
- 10: Spannschraube
- 11: Spannschraube
- 12: Außenring
- 13: Innenring
- 14: Borde
- 15: Nuten
- 16: Spannring
- 17: Teilfuge des Außenrings
- 18: Teilfuge des Innenrings
- 19: Teilfuge des Spannrings
- 20: Passbohrung
- 21: Passschraube
- 22: Lagerlängsachse

## Patentansprüche

1. Toroidal-Rollenlager, bestehend aus einem Außenring (1, 12) und einem Innenring (4, 13) sowie dazwischen auf konkaven Laufbahnen (2, 5) abrollenden, langen, leicht balligen Toroidalrollen (8), **dadurch gekennzeichnet, dass** der Innenring (4, 13) und/oder der Außenring (1, 12) in Achsrichtung geteilt sind.

2. Toroidal-Rollenlager nach Anspruch 1, **dadurch gekennzeichnet, dass** der Innenring (4, 13) und/oder der Außenring (1, 12) in zwei Hälften geteilt sind.

3. Toroidal-Rollenlager nach Anspruch 1 oder 2, **dadurch gekennzeichnet, dass** die Teile des Innenrings (4, 13) und/oder die Teile des Außenrings (1, 12) miteinander verschraubt sind.

4. Toroidal-Rollenlager nach einem der Ansprüche 1 bis 3, **dadurch gekennzeichnet, dass** der Innenring und/oder der Außenring durch wenigstens einen geteilten Spannring (16) fixiert sind.

5. Toroidal-Rollenlager nach einem der Ansprüche 1 bis 4, **dadurch gekennzeichnet, dass** die Teile des Innenrings (4, 13) und/oder die Teile des Außenrings (11, 12) und der wenigstens eine Spannring (16) im Bereich der Teilfugen (17, 18, 19) senkrecht zur Lagerlängsachse (22) verlaufende Querbohrungen (3, 7, 20) für Spannschrauben (10, 11, 21) aufweisen.

6. Toroidal-Rollenlager nach Anspruch 5, **dadurch gekennzeichnet, dass** wenigstens eine der Querbohrungen (3, 7, 20) als Passbohrung (20) für Passschrauben (21) ausgebildet ist.

7. Toroidal-Rollenlager nach einem der Ansprüche 1 bis 6, **dadurch gekennzeichnet, dass** der Innenring (4, 13) und/oder der Außenring (1, 12) beiderseits der Laufbahnen (2, 5) Borde (6, 14) aufweisen.

8. Toroidal-Rollenlager nach Anspruch 5, 6 oder 7, **dadurch gekennzeichnet, dass** die Querbohrungen (7) in den Borden (6) angeordnet sind.

9. Toroidal-Rollenlager nach einem der vorherigen Ansprüche, **dadurch gekennzeichnet, dass** der wenigstens eine Spannring (16) in Achsrichtung geteilt ist und die Spannringhälften miteinander verschraubt sind.

10. Toroidal-Rollenlager nach einem der vorherigen Ansprüche, **dadurch gekennzeichnet, dass** der wenigstens eine Spannring (16) in wenigstens einer Nut im Außenring (1, 12) und/oder zwei Spannringe (16) in Nuten (15) in den Borden (14) des Innenrings (13) angeordnet sind.
